# EUROPÄISCHE PATENTSCHRIFT

(11) **EP 4 322 398 B1**
(45) Veröffentlichungstag und Bekanntmachung des Hinweises auf die Patenterteilung: **23.10.2024**
(21) Anmeldenummer: 23190226.3
(22) Anmeldetag: 08.08.2023
(51) Int. Cl.: H02S 20/30, H02S 30/10, H02S 40/42

(54) **SOLAREINHEIT FÜR DEN BETRIEB AUF, INSBESONDERE LANDWIRTSCHAFTLICH GENUTZTEN, FREIFLÄCHEN, PHOTOVOLTAIKANLAGE DAMIT SOWIE VERFAHREN ZUM BETREIBEN EINER DERARTIGEN SOLAREINHEIT**
SOLAR UNIT FOR OPERATION ON, IN PARTICULAR, AGRICULTURAL OPEN AREAS, PHOTOVOLTAIC SYSTEM COMPRISING SAME, AND METHOD FOR OPERATING SUCH A SOLAR UNIT
UNITÉ SOLAIRE POUR FONCTIONNEMENT SUR DES SURFACES LIBRES, EN PARTICULIER SUR DES SURFACES AGRICOLES, INSTALLATION PHOTOVOLTAÏQUE DOTÉE DE CELLE-CI ET PROCÉDÉ DE FONCTIONNEMENT D'UNE TELLE UNITÉ SOLAIRE

(30) Priorität: 08.08.2022 DE 102022119928
(43) Veröffentlichungstag der Anmeldung: 14.02.2024
(73) Patentinhaber: PT Bröring GmbH & Co. KG, 49696 Molbergen (DE)
(72) Erfinder: Bröring, Michael, 49696 Molbergen (DE); Bröring, Wilfried, 49696 Molbergen (DE)
(74) Vertreter: Jabbusch, Matthias

(56) Entgegenhaltungen:
- WO-A1-2012/172206
- DE-U1- 202020 104 859

## Beschreibung

Die Erfindung betrifft eine Solareinheit für den Betrieb auf, insbesondere landwirtschaftlich genutzten, Freiflächen nach dem Oberbegriff des Patentanspruchs 1. Die Erfindung betrifft ferner eine Photovoltaikanlage mit wenigstens einer erfindungsgemäßen Solareinheit. Außerdem betrifft die Erfindung ein Verfahren zum Betreiben einer Solareinheit nach dem Oberbegriff des Patentanspruchs 12.

Eine Solareinheit weist mehrere Photovoltaikmodule und eine die Photovoltaikmodule tragende Rahmenkonstruktion auf. Für die Aufstellung derartiger Solareinheiten auf einem Feld einer landwirtschaftlich genutzten Freifläche ist es bekannt, die Solareinheiten auf Fundamenten derart voneinander beabstandet auf einem Feld zu installieren, dass Streifen zwischen den Solareinheiten von landwirtschaftlichen Fahrzeugen befahren werden können. Direkt unter den Solareinheiten wächst in der Regel dauerhaft Gras, das gelegentlich von den Streifen aus gemäht oder ansonsten auch von beispielsweise Schafen beweidet wird. Das Feld ist daher nur eingeschränkt landwirtschaftlich nutzbar. Solare Energie wird aufgrund der Streifen zwischen den Solareinheiten und der dadurch bedingten geringen Dichte von Photovoltaikmodulen auf dem Feld von dieser bekannten Photovoltaikanlage nur begrenzt bereitgestellt.

Für eine bessere landwirtschaftliche Nutzung des Feldes ist es außerdem bekannt, Photovoltaikmodule gestützt auf einem fest installierten Gestell mit Ständern so hoch über einem Feld anzuordnen, dass eine Bearbeitung mittels landwirtschaftlichen Maschinen darunter möglich ist. Eine derartige Konstruktion ist jedoch aufwendig und teuer in der Herstellung. Die landwirtschaftliche Nutzung bleibt aufgrund der Ständer trotzdem beeinträchtigt. Die Photovoltaikmodule müssen schließlich so durchscheinend ausgebildet sein, dass alle darunter auf dem Feld anzubauenden Pflanzen ausreichend Sonneneinstrahlung für ihr Wachstum erhalten. Damit ist einerseits die Auswahl auf dem Feld anbaubarer Pflanzensorten eingeschränkt und andererseits auch der mögliche Ertrag und damit die Bereitstellung solar erzeugter Energie vermindert.

In der WO 2012/172206 A1 wird ein Verfahren und eine Vorrichtung zum Bewässern von Flächen beschrieben, wobei die Vorrichtung um einen Mittelpunkt kreisförmig verfährt und die Energie für das Verfahren aus einer Photovoltaikanlage erzielt wird. Die Oberfläche der Photovoltaikanlage wird dabei abhängig vom Sonnenstand innerhalb der Halterung ausgerichtet.

In der DE 20 2020 104 859 U1 ist ein System zum Kombinieren landwirtschaftlicher Tätigkeiten mit der Erzeugung von Sonnenenergie beschrieben. Dieses System enthält mobile Träger für Solarmodule die auf oder über Schienen beweglich sind, wobei der Abstand zwischen den Schienen mehrere Meter beträgt und wobei die Träger eine Dachkonstruktion enthalten, bei der sich der First der Dachkonstruktion über dem Boden befindet und auf beiden Seiten des Firsts Reihen von Solarmodulen auf dem Dach angeordnet sind.

Der Erfindung liegt die Aufgabe zugrunde, eine Solareinheit, eine Photovoltaikanlage und ein Verfahren zum Betreiben einer Solareinheit bereitzustellen, mit denen kostengünstig eine verbesserte Nutzung von Freiflächen für solare Energieerzeugung ermöglicht wird.

Die Erfindung löst diese Aufgabe mit einer Solareinheit nach dem Patentanspruch 1, mit einer Photovoltaikanlage nach dem Patentanspruch 8 und mit einem Verfahren zum Betreiben einer Solareinheit nach dem Patentanspruch 12. Vorteilhafte Ausführungsformen der Erfindung sind in den Unteransprüchen angegeben.

Bei einer Solareinheit für den Betrieb auf, insbesondere landwirtschaftlich genutzten, Freiflächen mit mehreren Photovoltaikmodulen und mit einer die Photovoltaikmodule tragenden Rahmenkonstruktion ist erfindungswesentlich vorgesehen, dass die Rahmenkonstruktion eine mobile Rahmenkonstruktion ist, welche frei auf dem Untergrund aufsteht, und dass die Rahmenkonstruktion zur Ballastierung der Solareinheit Speicherrohre aufweist, die als Flüssigkeitsspeicher für eine Flüssigkeit ausgebildet sind.

Bei einem Verfahren zum Betreiben einer Solareinheit, insbesondere der erfindungsgemäßen Solareinheit gemäß einer ihrer möglichen Ausführungsformen, die mehrere Photovoltaikmodule und eine die Photovoltaikmodule tragende mobile Rahmenkonstruktion, welche frei auf dem Untergrund aufsteht, aufweist, auf, insbesondere landwirtschaftlich genutzten, Freiflächen ist erfindungswesentlich vorgesehen, dass die Rahmenkonstruktion als mobile Rahmenkonstruktion frei auf dem Untergrund aufsteht und dass zur Ballastierung der Solareinheit Speicherrohre der Rahmenkonstruktion als Flüssigkeitsspeicher für Flüssigkeit verwendet werden.

Dank der Erfindung kann ein auf herkömmliche Weise bestelltes Feld nach der Ernte oder eine ansonsten brach liegende Kranfläche neben einer Windkraftanlage für die solare Energieerzeugung genutzt werden, indem die Solareinheiten mit ihren erfindungsgemäß mobilen Rahmenkonstruktionen darauf platziert werden. Dank der in der Rahmenkonstruktion gespeicherten Flüssigkeit ist eine ausreichende Ballastierung der Solareinheiten gegeben, die feste Fundamente auf der Kranfläche oder auf dem Feld entbehrlich macht. Das Feld mit den darauf platzierten Solareinheiten braucht währenddessen nicht bearbeitet zu werden. Außerdem ist es von Vorteil, wenn das Feld zeitweise brach liegen gelassen wird oder zumindest nicht für den erwerbsmäßigen Anbau von beispielsweise Getreide genutzt wird. Daher können die Solareinheiten ohne Rücksicht auf eine Befahrbarkeit des Feldes und ungeachtet der Beschattung des Feldes sehr dicht auf dem Feld platziert werden, so dass mittels aller auf dem Feld platzierten Solareinheiten insgesamt eine hohe elektrische Energieausbeute pro Flächeneinheit erreicht wird.

Bei einer vorteilhaften Ausführungsform der erfindungsgemäßen Solareinheit weisen die Photovoltaikmodule an ihren Rückseiten Wärmetauscher auf, die zur Kühlung der Photovoltaikmodule zusammen mit den Speicherrohren in wenigstens einen Kreislauf, in dem die Flüssigkeit zirkuliert, eingebunden und zur Kühlung des jeweiligen Photovoltaikmoduls von der im jeweiligen Kreislauf zirkulierenden Flüssigkeit durchströmbar sind. Verfahrensgemäß werden die Photovoltaikmodule von der im jeweiligen Kreislauf zirkulierenden Flüssigkeit durchströmt und dadurch gekühlt. Dadurch wird einer Minderung des Wirkungsgrades der Photovoltaikmodule durch deren Überhitzung entgegengewirkt.

Die Flüssigkeit ist bei einer Ausführungsform der Erfindung Wasser, welches bei Bedarf auch einfach abgelassen werden kann, beispielsweise wenn die Solareinheit an einen anderen Ort gezogen werden soll.

Gemäß einer hierzu alternativen und bevorzugten Ausführungsform der Solareinheit ist vorgesehen, dass in die Solareinheit eine Redox-Flow-Batterie mit zwei in getrennten Kreisläufen zirkulierenden Elektrolytlösungen zum chemischen Speichern elektrischer Energie integriert ist und dass die als Flüssigkeitsspeicher für die Flüssigkeit ausgebildeten Speicherrohre als Elektrolytspeicher für die Elektrolytlösungen ausgebildet sind. Bei einer vorteilhaften Ausführungsform des Verfahrens ist entsprechend vorgesehen, dass elektrische Energie in der Redox-Flow-Batterie chemisch gespeichert wird, wobei die als Flüssigkeitsspeicher für die Flüssigkeit ausgebildeten Speicherrohre als Elektrolytspeicher für die Elektrolytlösungen verwendet werden.

Dank der Integration der Redox-Flow-Batterie in die Solareinheit ist mittels chemischer Zwischenspeicherung solar erzeugter elektrischer Energie mit Hilfe der Elektrolytlösungen die Bereitstellung elektrischer Energie beispielsweise auch in der Nacht oder bei Bedarf möglich, um etwa lokal die Batterie eines elektrisch angetriebenen Fahrzeugs damit zu laden. Alternativ oder zusätzlich wird die solar erzeugte elektrische Energie direkt nach ihrer Erzeugung oder nach ihrer Zwischenspeicherung über einen bestehenden Netzanschluss in ein Stromnetz eingespeist.

Bei einer weiteren vorteilhaften Ausführungsform der erfindungsgemäßen Solareinheit weist deren Rahmenkonstruktion von den Speicherrohren ausgebildete Kufen auf, mittels denen die Solareinheit auf dem Untergrund aufsteht und auf denen die Solareinheit über den Untergrund gleiten kann, um die Solareinheit an einen anderen Ort, insbesondere von einem Feld auf ein anderes Feld, ziehen zu können. Verfahrensgemäß wird die Solareinheit an einen anderen Ort, insbesondere von einem Feld auf ein anderes Feld, gezogen, wobei die Solareinheit auf Kufen über den Untergrund gleitet. Untere Rohre der Rahmenkonstruktion ermöglichen somit das Ziehen der Solareinheit ohne hierfür Räder vorsehen zu müssen. Vorteilhafterweise sind hierfür die Kufen parallel zueinander und in Längsrichtung der Solareinheit ausgebildet. Die Kufen sorgen für eine Lastverteilung, die einem Einsinken der Solareinheit in den Untergrund und einem Festfahren entgegenwirkt. Der Schwerpunkt der Solareinheit liegt zudem Dank der Flüssigkeit in den Kufen vorteilhaft niedrig, so dass eine hohe Standfestigkeit der Solareinheit ohne die Notwendigkeit von Fundamenten gegeben ist.

Die Photovoltaikmodule der Solareinheit sind bevorzugt quer zur Längsrichtung der Solareinheit gegenüber ihrer Aufstandsfläche geneigt auf der Rahmenkonstruktion angeordnet, also insbesondere quer zur Ausrichtung der Kufen geneigt angeordnet. Bevorzugt werden können die Solareinheiten somit in etwa in Ostwestrichtung auf der brach liegenden Kranfläche oder dem Feld angeordnet werden, wobei hierbei die Photovoltaikmodule schräg nach Süden ausgerichtet sind.

Mit Vorteil ist die Elektrolytlösung in gegenüber den Kufen weiteren Teilen der Rahmenkonstruktion angeordnet, so dass hierfür keine separaten Leitungen vorgesehen werden müssen. Insbesondere ist vorgesehen, dass die Rahmenkonstruktion Leitungsrohre aufweist, die als Flüssigkeitsleitungen für die Flüssigkeit, insbesondere als Elektrolytleitungen für die Elektrolytlösungen, ausgebildet sind. Diese Leitungsrohre sind vorzugsweise mit den Kufen flüssigkeitsleitend verbunden.

Die Leitungsrohre verbinden bei einer vorteilhaften Ausgestaltung der Ausführungsform mit der in die Solareinheit integrierten Redox-Flow-Batterie die Kufen, also die Energiespeicher, mit weiteren Komponenten der Redox-Flow-Batterie. Insbesondere ist vorgesehen, dass die Solareinheit in jedem Kreislauf wenigstens eine Pumpe zum Pumpen der jeweiligen Elektrolytlösung durch die dem jeweiligen Kreislauf zugeordneten Elektrolytleitungen hindurch aufweist. Weiter ist insbesondere vorgesehen, dass die Solareinheit eine galvanische Zelle für den Ionenaustausch zwischen den Elektrolytlösungen in den Kreisläufen aufweist. Die galvanische Zelle ist also in beide Kreisläufe eingebunden. Auch bei Nutzung von Wasser als Flüssigkeit ist vorzugsweise wenigstens ein Kreislauf mit wenigstens einer Pumpe vorgesehen, um das Wasser zur Kühlung der Photovoltaikmodule zirkulieren zu lassen.

Die Solareinheit ist insbesondere dazu ausgebildet, von den Photovoltaikmodulen bereitgestellte elektrische Energie in der Redox-Flow-Batterie zu speichern. Vorzugsweise ist die Solareinheit zur Einspeisung elektrischer Energie an ein externes Stromnetz, insbesondere an das öffentliche Stromnetz, angeschlossen. Alternativ wird die solar erzeugte und gegebenenfalls zwischengespeicherte Energie lokal bereitgestellt.

Die Solareinheit ist bei einer Weiterbildung der Erfindung dazu ausgebildet ist, die in das externe Stromnetz eingespeiste elektrische Energie in Abhängigkeit von der von den Photovoltaikmodulen bereitgestellten elektrischen Energie und vom Ladezustand der Redox-Flow-Batterie zu dimensionieren.

Bei einer weiteren Weiterbildung der Erfindung ist die Solareinheit dazu ausgebildet, die von den Photovoltaikmodulen bereitgestellte elektrische Energie bis zu einem definierten Grenzwert in das externe Stromnetz einzuspeisen und die darüber hinausgehend bereitgestellte elektrische Energie in der Redox-Flow-Batterie zu speichern. Von Vorteil ist es hierbei, diesen definierten Grenzwert in Abhängigkeit vom Ladezustand der Redox-Flow-Batterie zu verschieben.

Eine erfindungsgemäße Photovoltaikanlage weist wenigstens eine erfindungsgemäße Solareinheit gemäß einer ihrer Ausführungsformen auf, die auf einer Freifläche abgestellt ist. Die Freifläche, auf der die Solareinheit abgestellt ist, ist bei einer Ausführungsform der Erfindung die Kranfläche einer Windkraftanlage. Derartige Kranflächen sind neben dem Fuß von Windkraftanlagen vorgesehen, um dort zur Errichtung oder Wartung der jeweiligen Windkraftanlage einen Kran aufstellen zu können. Ansonsten liegen diese Kranflächen in der Regel brach. Durch die Aufstellung wenigstens einer erfindungsgemäßen Solareinheit auf der Kranfläche ist eine sinnvolle Nutzung dieser Kranfläche möglich.

Die solar erzeugte Energie kann durch die ohnehin für die Windkraftanlage vorhandene Einspeisevorrichtung in das öffentliche Stromnetz eingespeist werden. Insbesondere ist hierbei vorgesehen, dass die Photovoltaikanlage elektrisch mit der Windkraftanlage verbunden ist, wobei die wenigstens eine Solareinheit über eine Einspeisevorrichtung der Windkraftlage mit einem externen Stromnetz, insbesondere dem öffentlichen Stromnetz, verbunden ist. Bei Ausführungsformen mit integrierter Redox-Flow-Batterie kann außerdem vorgesehen sein, dass Windstrom bei Lastspitzen in der Redox-Flow-Batterie zwischengespeichert wird.

Eine weitere Ausführungsform der erfindungsgemäßen Photovoltaikanlage weist mehrere erfindungsgemäße Solareinheiten gemäß einer ihrer Ausführungsformen auf, die, insbesondere mit ihren Längsrichtungen parallel zueinander ausgerichtet, auf einem Feld einer landwirtschaftlich genutzten Freifläche stehen und über eine gemeinsame Einspeisevorrichtung mit einem externen Stromnetz, insbesondere mit dem öffentlichen Stromnetz, verbunden sind.

Weitere Ausführungsformen ergeben sich aus den Patentansprüchen, aus den beigefügten Zeichnungen und aus der nachfolgenden Beschreibung eines in den Zeichnungen dargestellten besonders bevorzugten Ausführungsbeispiels der Erfindung. In den Zeichnungen zeigen:
- Figur 1:: eine Solareinheit gemäß einem Ausführungsbeispiel der Erfindung in vereinfachter Darstellung in einer Seitenansicht; und
- Figur 2:: die Solareinheit von Figur 1 in einer Draufsicht.

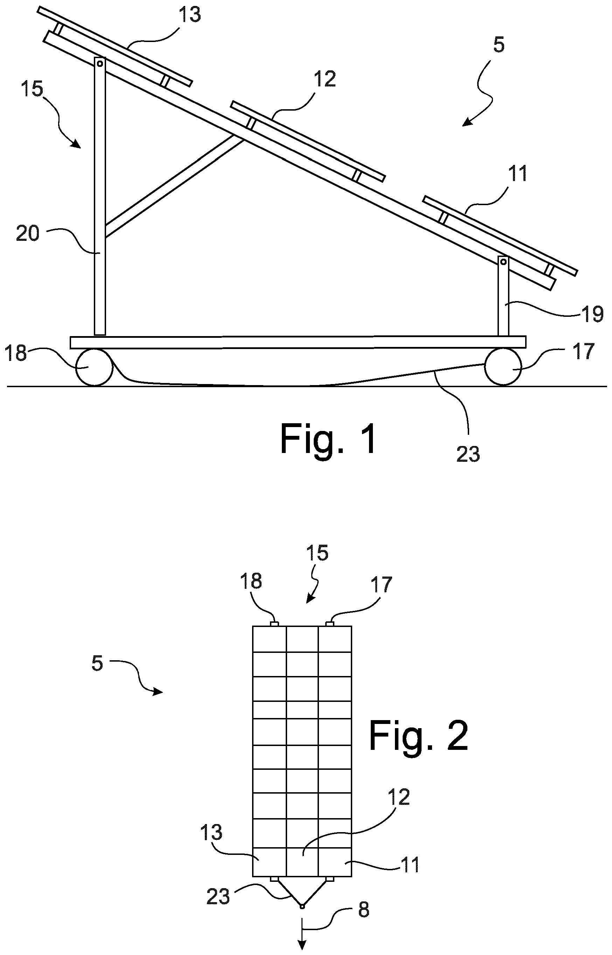

In den Figuren 1 und 2 ist eine erfindungsgemäße Solareinheit 5 mit einer Vielzahl von in drei Reihen nebeneinander angeordneten Photovoltaikmodulen dargestellt, von denen beispielhaft ein Photovoltaikmodul 11 in der ersten Reihe, ein Photovoltaikmodul 12 in der zweiten Reihe und ein Photovoltaikmodul 13 in der dritten Reihe bezeichnet sind. Die Solareinheit 5 weist eine Rahmenkonstruktion 15 auf, welches die Photovoltaikmodule 11, 12, 13 trägt. Die Rahmenkonstruktion 15 weist Speicherrohre 17 und 18 sowie Leitungsrohre 19 und 20 und weitere nicht bezeichnete Leitungsrohre sowie gegebenenfalls verbindende Verbindungsleitungen, die nicht Teil der Rahmenkonstruktion 15 sind, auf. Die Speicherrohre 17 und 18 bilden parallel zueinander ausgerichtete Gleitkufen, mit denen die Solareinheit 5 auf dem Untergrund aufsteht und auf denen die Solareinheit 5 in einer Zugrichtung 8 gleitend über den Untergrund gezogen werden kann. Die Speicherrohre 17 und 18 sind dabei parallel zur Zugrichtung 8 ausgerichtet. Die Speicherrohre 17 und 18 sind in Figur 2 im Wesentlichen verdeckt unter den Photovoltaikmodulen 11, 12, 13 angeordnet und daher nur an ihren vorstehenden Enden sichtbar.

Zum Ziehen der Solareinheit 5 in Zugrichtung 8 ist an der Rahmenkonstruktion 15 ein Zugmittel 23 in Form wenigstens eines Zugseils an zwei Befestigungspunkten befestigt. Insbesondere ist das Zugmittel 23 an den Speicherrohren 17 und 18 befestigt, kann alternativ jedoch auch beispielsweise an den Leitungsrohren 19 und 20, vorzugsweise in deren unteren Bereich, befestigt sein.

Die Speicherrohre 17 und 18 sind zur Ballastierung der Solareinheit 5 jeweils mit einer Elektrolytlösung gefüllt und sind damit zugleich Elektrolytspeicher einer in die Solareinheit 5 integrierten Redox-Flow-Batterie. Die Leitungsrohre 19 und 20 sowie die gegebenenfalls vorhandenen Verbindungsleitungen sind entsprechend Elektrolytleitungen für die Elektrolytlösung und verbinden die Speicherrohre 17 und 18 mit den Photovoltaikmodulen 11, 12, 13. Dabei sind zwei voneinander getrennte Kreisläufe der Redox-Flow-Batterie gebildet, die jeweils eine in den Figuren nicht dargestellte Pumpe zum Umwälzen der Elektrolytlösung aufweisen und die in einer ebenfalls nicht dargestellten galvanischen Zelle, in der ein Ionenaustausch unter Aufnahme oder Abgabe elektrischer Energie stattfindet, aneinander vorbeigeführt sind. An den Photovoltaikmodulen 11, 12, 13 sind rückseitig Wärmetauscher ausgebildet, die von den Elektrolytlösungen durchströmt werden. Die Elektrolytlösungen sorgen dort somit für eine Abfuhr von Wärme und wirken einer zu starken Erwärmung der Photovoltaikmodule 11, 12, 13 entgegen.

## Patentansprüche

1. Solareinheit (5) für den Betrieb auf, insbesondere landwirtschaftlich genutzten, Freiflächen mit mehreren Photovoltaikmodulen (11, 12, 13) und mit einer die Photovoltaikmodule (11, 12, 13) tragenden Rahmenkonstruktion (15),
**dadurch gekennzeichnet,**
**dass** die Rahmenkonstruktion (15) eine mobile Rahmenkonstruktion (15) ist, welche frei auf dem Untergrund aufsteht, und
**dass** die Rahmenkonstruktion (15) zur Ballastierung der Solareinheit (5) Speicherrohre (17, 18) aufweist, die als Flüssigkeitsspeicher für eine Flüssigkeit ausgebildet sind.

2. Solareinheit (5) nach Anspruch 1, **dadurch gekennzeichnet, dass** die Photovoltaikmodule (11, 12, 13) an ihren Rückseiten Wärmetauscher aufweisen, die zur Kühlung der Photovoltaikmodule (11, 12, 13) zusammen mit den Speicherrohren (17, 18) in wenigstens einen Kreislauf, in dem die jeweilige Flüssigkeit zirkuliert, eingebunden und zur Kühlung des jeweiligen Photovoltaikmoduls (11, 12, 13) von der im jeweiligen Kreislauf zirkulierenden Flüssigkeit durchströmbar sind.

3. Solareinheit (5) nach einem der vorhergehenden Ansprüche, **dadurch gekennzeichnet, dass** in die Solareinheit (5) eine Redox-Flow-Batterie mit zwei in getrennten Kreisläufen zirkulierenden Elektrolytlösungen zum chemischen Speichern elektrischer Energie integriert ist und
dass die als Flüssigkeitsspeicher für die Flüssigkeit ausgebildeten Speicherrohre (17, 18) als Elektrolytspeicher für die Elektrolytlösungen ausgebildet sind.

4. Solareinheit (5) nach einem der vorherigen Ansprüche, **dadurch gekennzeichnet, dass** die Rahmenkonstruktion (15) von den Speicherrohren (17, 18) ausgebildete Kufen aufweist, mittels denen die Solareinheit (5) auf dem Untergrund aufsteht und auf denen die Solareinheit (5) über den Untergrund gleiten kann, um die Solareinheit (5) an einen anderen Standort, insbesondere von einem Feld auf ein anderes Feld, ziehen zu können.

5. Solareinheit (5) nach Anspruch 4, **dadurch gekennzeichnet, dass** die Kufen parallel zueinander und in Längsrichtung der Solareinheit (5) ausgebildet sind.

6. Solareinheit (5) nach einem der vorherigen Ansprüche, **dadurch gekennzeichnet, dass** die Photovoltaikmodule (11, 12, 13) quer zur Längsrichtung der Solareinheit (5) gegenüber ihrer Aufstandsfläche geneigt auf der Rahmenkonstruktion (15) angeordnet sind.

7. Solareinheit (5) nach einem der vorherigen Ansprüche, **dadurch gekennzeichnet, dass** die Rahmenkonstruktion (15) Leitungsrohre (19, 20) aufweist, die als Flüssigkeitsleitungen für die Flüssigkeit ausgebildet sind.

8. Photovoltaikanlage mit wenigstens einer Solareinheit (5) nach einem der vorherigen Ansprüche, die auf einer Freifläche, abgestellt ist.

9. Photovoltaikanlage nach Anspruch 8, **dadurch gekennzeichnet, dass** die Freifläche, auf der die Solareinheit (5) abgestellt ist, eine Kranfläche einer Windkraftanlage ist.

10. Photovoltaikanlage nach Anspruch 9, **dadurch gekennzeichnet, dass** die Photovoltaikanlage elektrisch mit der Windkraftanlage verbunden ist, wobei die wenigstens eine Solareinheit (5) über eine Einspeisevorrichtung der Windkraftlage mit einem externen Stromnetz, insbesondere dem öffentlichen Stromnetz, verbunden ist.

11. Photovoltaikanlage nach Anspruch 8 mit mehreren Solareinheiten (5) nach einem der Ansprüche 1 bis 7, die, insbesondere mit ihren Längsrichtungen parallel zueinander ausgerichtet, auf einem Feld einer landwirtschaftlich genutzten Freifläche stehen und über eine gemeinsame Einspeisevorrichtung mit einem externen Stromnetz, insbesondere mit dem öffentlichen Stromnetz, verbunden sind.

12. Verfahren zum Betreiben einer Solareinheit (5), insbesondere nach einem der Ansprüche 1 bis 7, die mehrere Photovoltaikmodule (11, 12, 13) und eine die Photovoltaikmodule (11, 12, 13) tragende Rahmenkonstruktion (15) aufweist, auf, insbesondere landwirtschaftlich genutzten, Freiflächen,
**dadurch gekennzeichnet,**
**dass** die Rahmenkonstruktion (15) als mobile Rahmenkonstruktion frei auf dem Untergrund aufsteht und
**dass** zur Ballastierung der Solareinheit (5) Speicherrohre (17, 18) der Rahmenkonstruktion (15) als Flüssigkeitsspeicher für Flüssigkeit verwendet werden.

13. Verfahren nach Anspruch 12, **dadurch gekennzeichnet, dass** die Photovoltaikmodule (11, 12, 13) gekühlt werden, wobei Wärmetauscher, welche die Photovoltaikmodule (11, 12, 13) an ihren Rückseiten aufweisen und die zusammen mit den Speicherrohren (17, 18) in wenigstens einen Kreislauf, in dem die jeweilige Flüssigkeit zirkuliert, eingebunden sind, zur Kühlung des jeweiligen Photovoltaikmoduls (11, 12, 13) von der im jeweiligen Kreislauf zirkulierenden Flüssigkeit durchströmt werden.

14. Verfahren nach einem der Ansprüche 12 und 13, **dadurch gekennzeichnet, dass** elektrische Energie in einer in die Solareinheit (5) integrierten Redox-Flow-Batterie mit zwei in getrennten Kreisläufen zirkulierenden Elektrolytlösungen chemisch gespeichert wird, wobei die als Flüssigkeitsspeicher für die Flüssigkeit ausgebildeten Speicherrohre (17, 18) als Elektrolytspeicher für die Elektrolytlösungen verwendet werden.

15. Verfahren nach einem der Ansprüche 12 bis 14, **dadurch gekennzeichnet, dass** die Solareinheit (5) an einen anderen Standort, insbesondere von einem Feld auf ein anderes Feld, gezogen wird, wobei die Solareinheit (5) auf Kufen, die von den Speicherrohren (17, 18) der Rahmenkonstruktion (15) ausgebildet sind und mittels denen die Solareinheit (5) auf dem Untergrund aufsteht, über den Untergrund gleitet.

## Claims

1. A solar unit (5) for operation on, in particular, agricultural open areas, comprising a plurality of photovoltaic modules (11, 12, 13) and comprising a frame construction (15) bearing the photovoltaic modules (11, 12, 13),
**characterised in that**
the frame construction (15) is a mobile frame construction (15) which is positioned freely on the ground, and
**in that** for ballasting the solar unit (5) the frame construction (15) has storage pipes (17, 18) which are configured as liquid storage devices for a liquid.

2. The solar unit (5) according to Claim 1, **characterised in that** the photovoltaic modules (11, 12, 13) have on their rear faces heat exchangers which are incorporated together with the storage pipes (17, 18) in at least one circuit in which the respective liquid circulates for cooling the respective photovoltaic modules (11, 12, 13), and through which the liquid circulating in the respective circuit can flow for cooling the respective photovoltaic module (11, 12, 13).

3. The solar unit (5) according to one of the preceding claims, **characterised in that** a redox flow battery with two electrolyte solutions circulating in separate circuits is integrated in the solar unit (5) for chemically storing electrical energy and
**in that** the storage pipes (17, 18) which are configured as liquid storage devices for the liquid are configured as electrolyte storage devices for the electrolyte solutions.

4. The solar unit (5) according to one of the preceding claims, **characterised in that** the frame construction (15) has runners which are configured by the storage pipes (17, 18) and by means of which the solar unit (5) is positioned on the ground, and on which the solar unit (5) can slide over the ground in order to be able to pull the solar unit (5) to a different location, in particular from one field to another field.

5. The solar unit (5) according to Claim 4, **characterised in that** the runners are configured parallel to one another and in the longitudinal direction of the solar unit (5).

6. The solar unit (5) according to one of the preceding claims, **characterised in that** relative to their footprint the photovoltaic modules (11, 12, 13) are arranged at an angle on the frame construction (15) transversely to the longitudinal direction of the solar unit (5).

7. The solar unit (5) according to one of the preceding claims, **characterised in that** the frame construction (15) has pipes (19, 20) which are configured as liquid lines for the liquid.

8. A photovoltaic system comprising at least one solar unit (5) according to one of the preceding claims, which is parked on an open area.

9. The photovoltaic system according to Claim 8, **characterised in that** the open area on which the solar unit (5) is parked is a crane area of a wind turbine.

10. The photovoltaic system according to Claim 9, **characterised in that** the photovoltaic system is electrically connected to the wind turbine, wherein the at least one solar unit (5) is connected via a feed device of the wind turbine to an external power grid, in particular the public power grid.

11. The photovoltaic system according to Claim 8, comprising a plurality of solar units (5) according to one of Claims 1 to 7, which are located on a field of an agricultural open area, in particular oriented parallel to one another with their longitudinal directions, and which are connected via a common feed device to an external power grid, in particular to the public power grid.

12. A method for operating a solar unit (5), in particular according to one of Claims 1 to 7, which has a plurality of photovoltaic modules (11, 12, 13) and a frame construction (15) bearing the photovoltaic modules (11, 12, 13) on, in particular, agricultural open areas,
**characterised in that**
the frame construction (15) is positioned freely on the ground as a mobile frame construction and
**in that** for ballasting the solar unit (5) storage pipes (17, 18) of the frame construction (15) are used as liquid storage devices for liquid.

13. The method according to Claim 12, **characterised in that** the photovoltaic modules (11, 12, 13) are cooled, wherein heat exchangers, which the photovoltaic modules (11, 12, 13) have on their rear faces and which are incorporated together with the storage pipes (17, 18) in at least one circuit in which the respective liquid circulates, are flowed through by the liquid circulating in the respective circuit for cooling the respective photovoltaic module (11, 12, 13).

14. The method according to one of Claims 12 and 13, **characterised in that** electrical energy is chemically stored in a redox flow battery integrated in the solar unit (5), with two electrolyte solutions circulating in separate circuits, wherein the storage pipes (17, 18) which are configured as liquid storage devices for the liquid are used as electrolyte storage devices for the electrolyte solutions.

15. The method according to one of Claims 12 to 14, **characterised in that** the solar unit (5) is pulled to a different location, in particular from one field to another field, wherein the solar unit (5) slides over the ground on runners which are configured by the storage pipes (17, 18) of the frame construction (15) and by means of which the solar unit (5) is positioned on the ground.

## Revendications

1. Unité solaire (5) destinée à fonctionner dans des zones à usage agricole, notamment des espaces ouverts comportant plusieurs modules photovoltaïques (11, 12, 13) et comportant une structure d'ossature (15) supportant les modules photovoltaïques (11, 12, 13),
**caractérisée en ce que**
la structure d'ossature (15) est une structure d'ossature mobile (15) qui repose librement sur le sol, et
la structure d'ossature (15) en vue du lestage de l'unité solaire (5) présente des tubes de stockage (17, 18), qui servent de stockage de liquide pour un liquide.

2. Unité solaire (5) selon la revendication 1, **caractérisée en ce que** les modules photovoltaïques (11, 12, 13) comportent des échangeurs de chaleur sur leurs faces arrières, qui sont intégrés pour refroidir les modules photovoltaïques (11, 12, 13) ainsi que les tubes de stockage. (17, 18) dans au moins un circuit, dans lequel le liquide respectif circule, et peuvent être traversés par le liquide circulant dans le circuit respectif pour refroidir le module photovoltaïque respectif (11, 12, 13).

3. Unité solaire (5) selon une des revendications précédentes, **caractérisée en ce qu'**une batterie redox flow avec deux solutions électrolytiques circulant dans des circuits séparés est intégrée dans l'unité solaire (5) pour le stockage chimique d'énergie électrique et
les tubes de stockage (17, 18) faisant office de stockage de liquide pour le liquide sont conçus comme stockage d'électrolyte pour les solutions électrolytiques.

4. Unité solaire (5) selon une des revendications précédentes, **caractérisée en ce que** la structure d'ossature (15) présente des glissières formées par les tubes de stockage (17, 18), au moyen desquelles l'unité solaire (5) se dresse sur la surface et sur lesquelles l'unité solaire (5) peut glisser sur la surface, afin de pouvoir tracter l'unité solaire (5) vers un autre site, notamment d'un champ à un autre champ.

5. Unité solaire (5) selon la revendication 4, **caractérisée en ce que** les glissières sont formées parallèlement les unes aux autres et dans la direction longitudinale de l'unité solaire (5).

6. Unité solaire (5) selon une des revendications précédentes, **caractérisée en ce que** les modules photovoltaïques (11, 12, 13) sont disposés transversalement à la direction longitudinale de l'unité solaire (5) sur la structure d'ossature (15) selon un angle par rapport à leur surface portante.

7. Unité solaire (5) selon une des revendications précédentes, **caractérisée en ce que** la structure d'ossature (15) présente des conduites (19, 20), qui sont conçues comme conduites de liquide pour le liquide.

8. Système photovoltaïque comportant au moins une unité solaire (5) selon une des revendications précédentes, qui est stationnée dans un espace ouvert.

9. Système photovoltaïque selon la revendication 8, **caractérisé en ce que** l'espace ouvert sur lequel l'unité solaire (5) est stationnée est une surface de grue d'une éolienne.

10. Système photovoltaïque selon la revendication 9, **caractérisé en ce que** le système photovoltaïque est connecté électriquement à l'éolienne, dans lequel la au moins une unité solaire (5) est connectée à un réseau électrique externe, notamment au réseau électrique public, via un dispositif d'alimentation du système éolien.

11. Système photovoltaïque selon la revendication 8 comportant une pluralité d'unités solaires (5) selon une des revendications 1 à 7, qui, notamment avec leurs directions longitudinales alignées parallèlement les unes aux autres, sont utilisées sur un champ d'un espace ouvert utilisé comme zone à usage agricole et sont connectées via un dispositif d'alimentation commun à un réseau électrique externe, en particulier au réseau électrique public.

12. Procédé de fonctionnement d'une unité solaire (5), notamment selon une des revendications 1 à 7, qui comporte plusieurs modules photovoltaïques (11, 12, 13) et une structure d'ossature (15) supportant les modules photovoltaïques (11, 12, 13), sur des espaces ouverts, notamment des zones à usage agricole,
**caractérisé en ce que**
la structure d'ossature (15) se dresse librement sur le sol en tant que structure d'ossature mobile et
**en ce que** les tubes de stockage (17, 18) de la structure d'ossature (15) sont utilisés comme réservoir de liquide pour le lestage de l'unité solaire (5).

13. Procédé selon la revendication 12, **caractérisé en ce que** les modules photovoltaïques (11, 12, 13) sont refroidis, avec des échangeurs de chaleur qui portent les modules photovoltaïques (11, 12, 13) sur leurs faces arrières et qui sont intégrés avec les tubes de stockage (17, 18) dans au moins un circuit, dans lequel circule le liquide respectif, et peuvent être traversés par le liquide circulant dans le circuit respectif pour refroidir le module photovoltaïque respectif (11, 12, 13).

14. Procédé selon une des revendications 12 et 13, caractérisé en que l'énergie électrique est stockée chimiquement dans une batterie à flux redox intégrée à l'unité solaire (5) avec deux solutions électrolytiques circulant dans des circuits séparés, dans lequel des tubes de stockage (17, 18) faisant office de stockage liquide pour le liquide sont utilisés comme stockage d'électrolyte pour les solutions électrolytiques.

15. Procédé selon une des revendications 12 à 14, **caractérisé en ce que** l'unité solaire (5) est déplacée vers un autre site, notamment est tractée d'un champ vers un autre champ, dans lequel l'unité solaire (5) glisse sur le sol sur des glissières qui sont formés par les tubes de stockage (17, 18) de la structure d'ossature (15) et au moyen desquels l'unité solaire (5) se dresse sur le sol.
